# EUROPÄISCHE PATENTANMELDUNG

(11) **EP 3 699 569 A1**
(43) Veröffentlichungstag der Anmeldung: **26.08.2020**
(21) Anmeldenummer: 19159114.8
(22) Anmeldetag: 25.02.2019
(51) Int. Cl.: G01M 3/28, G06Q 50/06

(54) **DETEKTION EINER LECKAGE IN EINEM VERSORGUNGSNETZ**

(71) Anmelder: Siemens Aktiengesellschaft, 80333 München (DE)
(72) Erfinder: Allmaras, Moritz, 81673 München (DE); Wehrstedt, Jan Christoph, 81829 München (DE); Wever, Utz, 81539 München (DE)

(57) **Zusammenfassung**

Die Erfindung betrifft ein Verfahren zum Detektieren einer Leckage von Fluid in einem Versorgungsetz (10), wobei das Versorgungsnetz (10) Rohre (11), durch die das Fluid strömt, erste Sensoren (14) zur Messung der Durchflüsse des Fluids an ersten Orten im Versorgungsnetz (10) und mindestens einen zweiten Sensor (15) zur Messung des Durchflusses des Fluids an einem zweiten Ort im Versorgungsnetz (10) aufweist. Das Verfahren weist dabei die folgenden Schritte auf: a) Messen der Durchflüsse des Fluids an den ersten Orten mittels der ersten Sensoren (14); b) Vorhersage des Durchflusses an dem zweiten Ort mittels eines selbstlernenden Systems (SS) basierend auf den Werten der in Schritt a) gemessenen Durchflüsse an den ersten Orten, wobei das selbstlernende System (SS) dafür angelernt wurde, den Durchfluss an einem vorgegebenen Ort im Versorgungsnetz (10) vorherzusagen; c) Messen des tatsächlichen Durchflusses des Fluids an dem zweiten Ort mittels des am zweiten Ort befindlichen zweiten Sensors (15); d) Ermitteln der Differenz zwischen dem tatsächlichen am zweiten Ort gemessenen Durchfluss und dem von dem angelernten System (SS) vorhergesagten Durchfluss am zweiten Ort; und e) Ausgeben einer Meldung einer vermuteten Leckage, wenn die ermittelte Differenz größer als ein vorgegebener Grenzwert (G) ist. Die Erfindung betrifft des Weiteren eine Vorrichtung (30) zur Detektion einer Leckage von Fluid in einem Versorgungsnetz (10) und eine Anordnung umfassend ein Versorgungsnetz (10) und die erwähnte Vorrichtung (30).

## Beschreibung

Die Erfindung betrifft die Detektion einer Leckage von Fluid in einem Versorgungsnetz. Beispielhafte Anwendungen sind die Leckageerkennung in einem Trink- oder Abwassernetz oder in einem Gas- oder Fernwärmeversorgungsnetz.

Die Erfindung wird im Folgenden hauptsächlich in Bezug auf Trinkwasserversorgungsnetze beschrieben. Sie ist aber nicht auf die Verwendung in Trinkwasserversorgungsnetze beschränkt. Vielmehr ist sie beispielsweise auch in Abwassernetzen, Gasversorgungsnetzen oder Fernwärmeversorgungsnetzen einsetzbar.

Trinkwasser stellt heute, im 21. Jahrhundert, weltweit eine bedeutende Ressource dar. Die meisten Prognosen gehen davon aus, dass die Bedeutung von Trinkwasser mittel- und langfristig sogar noch zunehmen wird. Folglich ist zu erwarten, dass ein verantwortungsvoller und sparsamer Verbrauch von Trinkwasser immer wichtiger werden wird.

In diesem Zusammenhang gilt es, Leckagen, also der unbeabsichtigte und unerwünschte Austritt von Trinkwasser aus den Leitungen des Wassernetzes, so weit wie möglich zu vermeiden. Eine vollständige Vermeidung, also eine vollständige Dichtigkeit des Netzes, ist in der Regel jedoch nicht möglich. Erfahrungsgemäß kommt es in Deutschland zu Wasserverlusten im einstelligen Prozentbereich aufgrund von Leckagen im Trinkwasserversorgungsnetz; in anderen Ländern liegen die Verluste teilweise auch deutlich darüber.

Das allgemein zugrunde liegende Problem lässt sich demnach dadurch beschreiben, dass erkannt werden soll, ob in dem betrachteten Versorgungsnetz eine Leckage vorliegt. Das Erkennen, dass eine Leckage vorliegt, wird im Rahmen dieser Patentanmeldung auch als "Detektion" oder "Detektieren" einer Leckage bezeichnet. "Detektion" oder "Detektieren" schließt dabei nicht zwangsläufig eine Ortung/ Lokalisierung der Leckage ein. Wie aber gezeigt werden wird, kann die vorliegende Erfindung in manchen Ausführungsformen nicht nur das grundsätzliche Vorliegen einer Leckage (irgendwo) im Versorgungsnetz feststellen, sondern die Leckage sogar mehr oder weniger genau orten.

Im Stand der Technik gibt es bereits eine Reihe von Ansätzen, eine Leckage eines Fluids in einem Versorgungsnetz zu detektieren.

Ein erster wohlbekannter Ansatz ist die Aufstellung einer Massenbilanz. Hierbei wird sinnvollerweise ein abgrenzbarer Bereich des Netzes mit einem einzigen oder einer geringen Zahl von Zuflüssen betrachtet. Ein solcher abgegrenzte Bereich des Netzes wird in der Fachsprache auch als Messbezirk oder "District Metering Area" (DMA) bezeichnet. Eine DMA weist neben dem Zufluss bzw. Zuflüssen eine Anzahl von Verbrauchern und optional einen oder mehrere Abflüsse auf. Zur Aufstellung der Massenbilanz werden die Zuflüsse in die DMA der Summe der "Abflüsse" bei den Verbrauchern sowie gegebenenfalls der Abflüsse aus der DMA als Ganzes gegenübergestellt. Stimmen die Zuflüsse mit den so ermittelten Abflüssen überein, ist das Netz "dicht"; es liegen also keine Leckagen vor. Ist die Summe der Zuflüsse hingegen signifikant größer als die Summe der Abflüsse einschließlich der Verbräuche, ist von einem oder mehrerer Lecks im Netz auszugehen.

Ein Problem bei der Massenbilanz-Methode ist der große Aufwand der aufgewendet werden muss, da der genaue Verbrauch jedes einzelnen Verbrauchers für einen bestimmten Zeitraum ermittelt werden muss. Ein weiteres Problem ist datenschutzrechtlicher Natur. Die Gesetzeslage in vielen Ländern lässt beispielsweise eine zeitgenaue Erfassung und Aufzeichnung des Wasserverbrauchs aller Verbraucher einer DMA gar nicht zu.

Ein zweiter wohlbekannter Ansatz zur Detektion von Leckagen in einem Netz besteht in der sogenannten "Night Flow Analysis". Auch hier wird in der Regel ein abgrenzbarer Bereich des Netzes, also eine DMA, betrachtet. Bei einer Night Flow Analysis wird über einen verbrauchsarmen Zeitraum, beispielsweise zwischen 2 Uhr und 4 Uhr nachts, der Zufluss in die DMA erfasst. Auch kleinere Messintervalle im Bereich weniger Minuten sind typisch. Es wird der gesamte Zufluss in demselben Zeitraum über viele Tage bzw. Wochen ermittelt. Diese Zeitreihe wird mit statistischen Methoden auf einen Anstieg des Wasserverbrauchs als Indikator für eine neue Leckage untersucht. Im einfachsten Fall wird der Zufluss über die Zeit beobachtet und bei einem Anstieg desselben auf ein Leck geschlossen.

Ein Nachteil der Night Flow Analysis besteht darin, dass nur neue Leckagen, die nach Beginn der Messungen entstehen, erfasst werden. Ein weiterer Nachteil besteht darin, dass Sondereffekte, beispielsweise Sportveranstaltungen, die über Ausstrahlung im Fernsehen oder alternative Medien (Internet) im Messzeitraum für einen außergewöhnlich hohen Wasserverbrauch sorgen, fälschlicherweise als Hinweis auf eine Leckage gedeutet werden können. Schließlich können auch größere Änderungen in der Topologie des Netzes, beispielsweise der Bezug eines oder mehrerer Mehrfamilienhäuser oder die Inbetriebnahme einer im (nächtlichen) Messzeitraum aktiven Anlage in einem Gewerbe, zu einem Anstieg des Verbrauchs führen, der fälschlicherweise als eine neu entstandene Leckage im Netz gedeutet wird.

Ein Nachteil beider genannter Ansätze - Massenbilanz wie auch Night Flow Analysis - besteht des Weiteren darin, dass diese Verfahren im Idealfall lediglich erkennen, dass (irgendwo) im Netz eine Leckage vorliegt, aber nicht, wo diese vorliegt. Die Ortung der Leckage muss also mit anderen, zusätzlichen Verfahren vorgenommen werden.

Ein dritter dem Fachmann bekannter Ansatz zur Detektion von Leckagen in einem Netz besteht darin, die Durchflüsse an mehreren Orten im Netz zu messen und anschließend die gemessenen Werte mit simulierten Werten, die mittels einer - im Fall eines Wassernetzes - hydraulischen Simulation des Netzes erhalten wurden, zu vergleichen. Als Eingangsdaten für die hydraulische Simulation werden in der Regel die Topologie des Netzes, das heißt die Anordnung der Leitungen (Rohre), und die Orte und Art jedes mit dem Versorgungsnetz verbundenen Verbrauchers, benötigt. Da aufgrund des oben geschilderten erheblichen Aufwands und datenschutzrechtlicher Bedenken nicht auf die tatsächlichen Verbräuche der Verbraucher abgestellt werden kann, werden ferner Ersatzverbrauchsprofile für die verschiedenen vorhandenen Arten von Verbrauchern im Netz benötigt. Unter einem Ersatzverbrauchsprofil wird ein fiktives, repräsentatives Verbrauchsprofil eines bestimmten Verbrauchertyps - Wohnung, Einfamilienhaus, Kleingewerbe - verstanden. Basierend auf der Topologie des Netzes, der damit verbundenen Verbraucher und den verwendeten Ersatzverbrauchsprofile kann mittels einer hydraulischen Simulation der zeitabhängige Durchfluss des Wassers durch die Leitung für jeden Punkt im Netz berechnet werden. Unterscheiden sich die mittels der vorhandenen Sensoren gemessenen tatsächlichen Durchflüsse signifikant von den berechneten Werten, wird auf eine Leckage im Netz geschlossen. Weist das Netz eine Vielzahl von Sensoren auf, kann durch die Auswertung aller Sensoren der Ort der Leckage im Idealfall eingegrenzt und zumindest grob lokalisiert werden.

Eine Herausforderung des geschilderten Ansatzes besteht darin, die hydraulische Simulation korrekt und mit vertretbarem Aufwand durchzuführen. Dies wird umso schwieriger, je größer und komplexer der betrachtete Teil des Netzes ist. Außerdem muss sowohl die Topologie bezüglich des Verlaufs und der Beschaffenheit der Leitungen als auch die Existenz und Charakterisierung der Verbraucher relativ gut bekannt sein.

Die vorliegende Erfindung hat sich zum Ziel gesetzt, ein alternatives Verfahren zur Detektion einer Leckage in einem Versorgungsnetz zu entwickeln, dass insbesondere auch bei relativ großen und komplexen Netzen eine Leckage zuverlässig erkennen und orten kann.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung und den Abbildungen.

Es wird ein Verfahren, insbesondere ein automatisiertes Verfahren, zum Detektieren einer Leckage von Fluid in einem Versorgungsetz vorgeschlagen, wobei das Versorgungsnetz Rohre, durch die das Fluid strömt, erste Sensoren zur Messung der Durchflüsse des Fluids an ersten Orten im Versorgungsnetz und mindestens einen zweiten Sensor zur Messung des Durchflusses des Fluids an einem zweiten Ort im Versorgungsnetz aufweist. Das Verfahren weist dabei die folgenden Schritte auf:
a) Messen der Durchflüsse des Fluids an den ersten Orten mittels der ersten Sensoren,
b) Vorhersage des Durchflusses an dem zweiten Ort mittels eines selbstlernenden Systems basierend auf den Werten der in Schritt a) gemessenen Durchflüsse an den ersten Orten, wobei das selbstlernende System dafür angelernt wurde, den Durchfluss an einem vorgegebenen Ort im Versorgungsnetz vorherzusagen,
c) Messen des tatsächlichen Durchflusses des Fluids an dem zweiten Ort mittels des am zweiten Ort befindlichen zweiten Sensors,
d) Ermitteln der Differenz zwischen dem tatsächlichen am zweiten Ort gemessenen Durchfluss und dem von dem angelernten System vorhergesagten Durchfluss am zweiten Ort, und
e) Ausgeben einer Meldung einer vermuteten Leckage, wenn die ermittelte Differenz größer als ein vorgegebener Grenzwert ist.

Die Erfinder haben erkannt, dass sich für die Detektion einer Leckage in einem Versorgungsnetz ein selbstlernendes System in vorteilhafter Weise verwenden lässt. In einer ersten Phase wird das selbstlernende System angelernt, den Durchfluss an einem vorgegebenen Ort des Versorgungsnetzes vorhersagen zu können. Nach der Anlernphase wird das angelernte System während des Betriebs des Versorgungsnetzes verwendet. Hierfür sagt das angelernte System basierend auf während des Betriebs tatsächlich gemessenen Durchflüssen den Durchfluss an einem bestimmten Ort im Versorgungsnetz voraus. Der Gedanke ist, dass der vorhergesagte Wert den erwarteten Durchfluss korrekt angibt. Nun wird der Durchfluss an dem bestimmten Ort, für den der Durchflusswert vorhergesagt wurde, tatsächlich gemessen. Stimmen der vorhergesagte mit dem tatsächlich gemessenen Wert überein, wird auf ein "stabiles" und "dichtes" Versorgungsnetz geschlossen. Insbesondere wird daraus die Schlussfolgerung gezogen, dass nach dem Abschluss der Anlernphase des selbstlernenden Systems keine Leckagen in der Umgebung des untersuchten Ortes im Netz entstanden sind. Überschreitet dagegen die Differenz zwischen dem vorhergesagten und tatsächlich gemessenen Durchflusswert eine gewisse Schwelle, d.h. einen vorgegebenen Grenzwert, wird eine Meldung ausgegeben. Die Überschreitung des Grenzwertes ist im Regelfall als ein Hinweis auf ein neu entstandenes Leck im Versorgungsnetz zu deuten.

Ein Vorteil des erfindungsgemäßen Verfahrens ist die Schnelligkeit, mit der festgestellt werden kann, ob Anomalien im Versorgungsnetz vorliegen oder nicht. Dies begründet sich darauf, dass das angelernte System in der Regel sehr schnell den Durchfluss an dem betreffenden Ort vorhersagen kann, da das angelernte System hierfür keine analytischen oder modellbasierten Berechnungen durchführt oder auf solche zurückgreifen müsste. Vielmehr hat das selbstlernende System während der Lernphase schlicht gelernt, welcher Durchfluss bei welchen Eingangsdaten zu erwarten ist und muss während des Betriebs lediglich gemäß antrainierter Gesetzmäßigkeiten ausgehend von den gegebenen Eingangsdaten - konkret: von den gemessenen Durchflüssen - auf den Durchflusswert an dem entsprechenden Ort folgern.

Eine Vorhersage des Durchflusses ist in der Regel nur für denjenigen Ort möglich, für den das selbstlernende System auch trainiert wurde. Es ist allerdings möglich, das selbstlernende System für die Vorhersage des Durchflusses an mehreren Orten des Versorgungsnetzes zu trainieren. Die Anzahl an Messpunkten im Netz muss nicht zwangsläufig größer als die derjenigen Orte, deren Durchflüsse vorhergesagt werden, sein, ist in der Regel jedoch.

Das beschriebene Verfahren lässt sich allgemein auf jede Art von Versorgungsnetzen anwenden, in dem eine Leckage eines Fluids zu detektieren ist. Unter einem Fluid wird jede Art von Flüssigkeit oder Gas verstanden. In dem Fall, dass es sich bei dem Fluid um Wasser handelt, ist das Versorgungsnetz insbesondere ein Trinkwasserversorgungs- oder Abwassernetz. In dem Fall, dass es sich bei dem Fluid beispielsweise um Erdgas handelt, ist das Versorgungsnetz insbesondere ein Gasversorgungsnetz. In dem Fall, dass es sich bei dem Versorgungsnetz um ein Fernwärmeversorgungsnetz handelt, ist das Überträgermedium, also das Fluid, meist Heißwasser, seltener auch Dampf.

Das Versorgungsnetz umfasst eine Reihe von Rohren, die auch als Rohrleitungen oder nur als Leitungen bezeichnet werden. Die Rohre sind dafür da, das Fluid zu den Verbrauchern und gegebenenfalls wieder von ihnen weg zu leiten. Die Rohre sind also dafür ausgestaltet, von dem Fluid durchströmt zu werden.

Im Rahmen dieser Patentanmeldung wird unter dem Durchfluss an einem bestimmten Ort im Versorgungsnetz das Volumen des Fluids verstanden, das pro Zeitspanne durch den Querschnitt des Rohrs an dem entsprechenden Ort fließt. Der Querschnitt des Rohrs ist dabei durch dessen Innerdurchmesser festgelegt. Der Durchfluss wird auch als "Volumenstrom" oder "Durchflussrate" bezeichnet. Er hat die SI-Einheit m³/h. Mit dem Durchfluss ist im Rahmen dieser Patentanmeldung also ein Wert gemeint, der den Durchfluss charakterisiert und quantifiziert. Er kann folglich auch als "Durchflusswert" bezeichnet werden.

Der Durchfluss wird mittels Durchflussmessern gemessen. Ein Durchflussmesser weist in der Regel zwei Hauptkomponenten auf: der eigentliche Messaufnehmer, der als Durchflusssensor dient, und ein Auswerte- und Speiseteil, das auch als Transmitter oder Messumformer bezeichnet wird. Die Durchflussmesser werden im Rahmen dieser Patentanmeldung auch als "Sensor" bezeichnet.

Das selbstlernende System ist vorzugsweise als künstliches neuronales Netz ausgestaltet. Es weist künstliche Neuronen auf, die auf einer oder mehreren Schichten liegen und miteinander verbunden sind. Ein künstliches Neuron kann mehrere Eingaben verarbeiten und entsprechend über seine Aktivierung reagieren. Dazu werden die Eingaben gewichtet an eine Ausgabefunktion übergeben, welche die Neuronenaktivierung berechnet. Die Gewichtungen werden während der Anlernphase des selbstlernenden Systems kontinuierlich angepasst, bis die Ausgabe für eine bestimmte Eingabe möglichst genau mit einem Zielwert übereinstimmt.

Der Fachmann weiß, wie er ein geeignetes selbstlernendes System konfiguriert. Ein Beispiel für ein geeignetes Programmiergerüst ist TensorFlow. TensorFlow ist ein Programmiergerüst (*englisch: Framework*) zur datenstromorientierten Programmierung. Es wird z.B. aus Python-Programmen heraus benutzt und ist in Python und C++ implementiert. TensorFlow ist insbesondere für selbstlernende Systeme im Bereich des maschinellen Lernens populär. TensorFlow wurde ursprünglich vom Google-Brain-Team für den Google-internen Bedarf entwickelt und später unter der Apache-2.0-Open-Source-Lizenz veröffentlicht. In der Forschung und im Produktivbetrieb wird TensorFlow derzeit von verschiedenen Teams in kommerziellen Google-Produkten wie Spracherkennung, Gmail, Google Fotos und Google Suche verwendet. Auch der Kartendienst Maps wird durch Analyse der von Street View aufgenommenen Fotos, die mit Hilfe einer auf TensorFlow basierenden künstlichen Intelligenz analysiert werden, verbessert. Viele dieser Produkte nutzten früher die Vorgängersoftware DistBelief.

Das Anlernen des selbstlernenden Systems umfasst die folgenden Schritte:
In einem ersten Schritt i) werden an mehreren ersten Orten im Versorgungsnetz mittels Durchflussmessern, die im Rahmen dieser Patentanmeldung auch als Sensoren bezeichnet werden und wovon vorzugsweise an jedem ersten Ort (auch: Messort) sich einer befindet, der jeweilige Durchfluss gemessen. Die Menge an gemessenen Durchflüssen an den verschiedenen ersten Orten bildet die Eingangsdaten für das selbstlernende System.

Im zweiten Schritt ii) bestimmt das selbstlernende System, also in der Regel das künstliche neuronale Netz, einen Ausgabewert basierend auf den in Schritt i) gesammelten Eingangsdaten. Bei dem Ausgabewert handelt es sich vorliegend konkret um den Durchfluss, d.h. den Durchflusswert, an dem entsprechenden Ort, dem sogenannten zweiten Ort.

Im dritten Schritt iii) wird der von dem selbstlernenden System bestimmte Durchfluss am zweiten Ort mit einem Zielwert verglichen und in einem vierten Schritt iv) das selbstlernende System unter Berücksichtigung des im vorigen Schritt angestellten Vergleichs angepasst. Das Lernverfahren, mit dem das selbstlernende System angelernt (oder: trainiert) wird, den Durchfluss an einem bestimmten Ort korrekt vorherzusagen, ist als ein überwachtes Lernen *(englisch: supervised learning)* ausgestaltet. Beim überwachten Lernen wird dem künstlichen neuronalen Netz ein Eingangsmuster gegeben und die Ausgabe, die das neuronale Netz in seinem aktuellen Zustand produziert, mit dem Wert verglichen, den es eigentlich ausgeben soll. Durch Vergleich von Soll- und Istausgabe kann auf die vorzunehmenden Änderungen der Netzkonfiguration geschlossen werden. Bei einlagigen neuronalen Netzen kann die Delta-Regel (auch Perzeptron-Lernregel) angewendet werden. Mehrlagige neuronale Netze werden in der Regel mit Fehlerrückführung *(englisch: Backpropagation)* trainiert, was eine Verallgemeinerung der Delta-Regel darstellt.

In einer ersten Alternative besteht der Zielwert aus einem tatsächlich gemessenen Durchfluss an demjenigen Ort, an dem das selbstlernende System den Durchfluss vorherzusagen hat. Mit anderen Worten wird der von dem selbstlernenden System vorhergesagte Durchfluss an dem zweiten Ort mit dem tatsächlich vorliegenden Durchfluss, gemessen mittels eines entsprechenden Sensors, verglichen.

Diese Wahl des Zielwertes hat den Vorteil, dass der Zielwert schnell und präzise erhalten werden kann. Der Zielwert ist schnell erhältlich, da hierfür lediglich eine Messung des Durchflusses mit einem entsprechenden Sensor notwendig ist. Der mittels eines Sensors gemessene Zielwert ist, abhängig von der Güte und Qualität des Sensors, von hoher Präzision, da er direkt gemessen wird und somit etwaige Fehlerquellen minimal sind.

In einer zweiten Alternative wird der Zielwert nicht direkt gemessen, sondern mittels einer Simulation bestimmt. Der von dem selbstlernenden System vorhergesagte Durchfluss an einem bestimmten Ort wird also mit einem mittels einer Simulation berechneten Durchfluss an dem genannten Ort verglichen. Eine entscheidende Bedingung dafür, dass die Anlernphase erfolgreich ist und, vor allem, dass das angelernte System erfolgreich im Betrieb eingesetzt werden kann, ist die Qualität der Simulation. Da die Durchflüsse, die die Simulation berechnet, als Zielwerte während des Trainings des selbstlernenden Systems verwendet werden, sollten die simulierten Durchflüsse die Realität mit hoher Verlässlichkeit und Präzision wiedergeben. Mit anderen Worten wird darauf vertraut, dass die Simulation imstande ist, für die unterschiedlichsten Eingangsdaten den tatsächlichen Durchflusswert exakt zu berechnen.

Der Vorteil eines analytisch oder modellbasiert berechneten Zielwerts besteht darin, dass es während der Anlernphase keines Sensors und keiner Durchflussmessung am entsprechenden Ort bedarf. Während des Betriebs ist jedoch ein Sensor und eine Durchflussmessung unvermeidbar, da während des Betriebs der von dem angelernten System vorhergesagte Durchfluss mit dem tatsächlich vorliegendem Durchfluss verglichen werden muss, und letzter durch eine tatsächliche Messung am entsprechenden Ort zu bestimmen ist.

Für den Fall, dass das Fluid Wasser ist, spricht man bei der Simulation auch von einer hydraulischen Simulation.

Im Allgemeinen ist die Simulation umso präziser, je zahlreicher und präziser ihr Input, das heißt ihre Eingangsdaten sind. Als Eingangsdaten für ein Versorgungsnetz kommen zum Beispiel die Topologie des Netzes infrage. Darunter versteht man die Anordnung und Beschaffenheit der Rohre einschließlich der Platzierung der Knoten, in dem sich drei oder mehr Rohre treffen. Weitere Eingangsdaten, die benötigt werden, sind die Orte, an denen mit dem Versorgungsnetz verbundene Verbraucher platziert sind, sowie die Art der Verbraucher. Weitere Eingangsdaten, die für eine präzise Simulation benötigt werden oder zumindest von großem Nutzen sind, sind Eigenschaften der Rohre wie beispielsweise deren Durchmesser oder deren Fließwiderstände. Schließlich sind irgendeine Art von Ersatzverbrauchsprofile für die verschiedenen Arten von Verbrauchern nötig. Da aus praktischen und datenschutzrechtlichen Gründen nicht die tatsächlichen Verbräuche der Verbraucher als Input genommen werden können, werden in der Regel repräsentative Verbräuche, sogenannte Ersatzverbrauchsprofile, der Simulation zugrunde gelegt. Es können beispielsweise je ein Ersatzverbrauchsprofil für ein Einfamilienhaus, Mehrfamilienhaus (mit Angabe der Wohneinheiten), Kleingewerbe, Krankenhaus, etc. verwendet werden.

Vorteilhafterweise werden die Zielwerte für die entsprechenden Eingangsdaten während der Anlernphase rasch zur Verfügung gestellt, da hierdurch die Dauer der Anlernphase minimiert werden kann. Hierfür kann es von Vorteil sein, die Eingangsdaten der Simulation vor der Bestimmung des Zielwerts zu reduzieren. Dies kann z.B. mittels einer Reihenentwicklung vorgenommen werden. Dem Fachmann sind entsprechende Techniken und Vorgehensweisen hierfür bekannt; lediglich beispielhaft wird in diesem Zusammenhang die Hauptkomponentenanalyse erwähnt.

Ändert sich die Topologie des Netzes in signifikantem Ausmaß, etwa durch signifikante Änderungen bei den Verbrauchern oder durch Änderungen bei den verlegten Rohren, muss das selbstlernende System neu angelernt werden. Das selbstlernende System kann aber in der Regel mit den Parametern, z.B. Gewichtungen, des bisherigen angelernten Systems vorbelegt werden, so dass gewöhnlicherweise nur eine relativ schnelle und unaufwändige Aktualisierung der Parameter, also eine verkürzte Anlernphase, notwendig ist.

Zurück zum Verfahren, das selbstlernende System anzulernen: Die genannten Schritte i) bis iv) werden so oft wiederholt, bis ein vorgegebenes Abbruchkriterium erreicht ist. Das Abbruchkriterium kann zum Beispiel darin bestehen, dass die Differenz zwischen dem von dem selbstlernenden System bestimmten Durchfluss an einem bestimmten Ort und dem "wahren" Durchfluss an diesem Ort - also dem Zielwert - kleiner als ein vorgegebener Schwellwert ist. Mit anderen Worten sollen beide Werte übereinstimmen oder sich nur unwesentlich unterscheiden. Um sicherzugehen, dass das selbstlernende System robust ist und über einen breiten Bereich von Eingangsdaten zuverlässig den wahren Durchfluss an dem entsprechenden Ort vorhersagt, kann das Abbruchkriterium ferner beinhalten, dass der Durchschnitt über eine vorbestimmte Anzahl an Iteration den vorgegebenen Schwellwert für die Differenz unterschreiten soll.

Ist das Abbruchkriterium erfüllt, wird das selbstlernende System nicht mehr weiter geändert. Im Fall eines künstlichen neuronalen Netzes werden z.B. die Gewichtungen an den künstlichen Neuronen nicht weiter angepasst, sondern festgehalten.

Nach der Anlernphase folgt der Betrieb des angelernten Systems, das auch als Nutzungsphase bezeichnet werden kann.

In einem ersten Schritt a) der Nutzungsphase werden die Durchflüsse des Fluids durch die Rohre an den ersten Orten im Versorgungsnetz gemessen. Dies hat im Wesentlichen an denselben Orten wie während der Anlernphase zu geschehen. Der Hintergrund dafür ist, dass ein angelerntes System für an den ersten Orten gemessene Durchflüsse angelernt wurde, so dass es auch in der Nutzungsphase nur mit Eingangsdaten von diesen ersten Orten zu verwenden ist. Plakativ gesprochen kann ein selbstlernendes Netz in der Regel nicht für das Erkennen von Äpfeln angelernt, aber zum Erkennen von Birnen genutzt werden.

Vorteilhafterweise werden die Durchflüsse während des Betriebs mittels derselben ersten Sensoren bestimmt, mittels derer das selbstlernende System in der Anlernphase mit Eingabedaten gefüttert wurde.

Im zweiten Schritt b) sagt das angelernte System auf Grundlage der konkret gemessenen Durchflüsse an den ersten Orten den Durchfluss an dem zweiten Ort voraus. Wenn das selbstlernende System während der Anlernphase gründlich und umfassend angelernt wurde, besteht die nicht unberechtigte Erwartung, dass der vorausgesagte Durchfluss für den zweiten Ort mit der Realität übereinstimmt.

Um dies zu überprüfen, wird im dritten Schritt c) der tatsächliche Durchfluss am zweiten Ort mittels eines Sensors gemessen. Wird während der Anlernphase der Zielwert bereits mittels Messung statt mittels Simulation bestimmt, kann vorteilhafterweise derselbe Sensor, der während der Anlernphase den Durchfluss am zweiten Ort gemessen hat, für die Messung des Durchflusses am zweiten Ort während der Nutzungsphase verwendet werden.

Im vierten Schritt d) wird die Differenz zwischen dem vom angelernten System vorausgesagten Durchfluss und dem vom zweiten Sensor gemessenen Durchfluss ermittelt. Das Subtrahieren des einen von dem anderen Wert kann computerimplementiert oder regelungstechnisch implementiert werden.

Im fünften Schritt e) wird eine Meldung ausgegeben, wenn die genannte Differenz einen vorgegebenen Grenzwert überschreitet. Mit anderen Worten wird ein Warnhinweis ausgegeben, wenn die Vorhersage mit der Messung für den Durchfluss nicht übereinstimmt bzw. die beiden Werte erheblich voneinander abweichen. Wenn man von der an sich korrekten Voraussage des angelernten Systems ausgeht, ist eine signifikante Abweichung zwischen Voraussage und Messung ein deutlicher Hinweis darauf, dass, unter der Voraussetzung, dass an sich die Topologie des Versorgungsnetzes seit der Anlernphase unverändert geblieben ist, nach Beendigung der Anlernphase eine Leckage im Versorgungsnetz entstanden ist. Es kann des Weiteren darauf geschlossen werden, dass die Leckage zumindest in der Umgebung des zweiten Ortes vorliegen muss oder zumindest einen messbaren Einfluss darauf hat.

Vorteilhafterweise werden die ersten Sensoren im Versorgungsnetz so platziert, dass ihre Messwerte nicht miteinander korrelieren. Es ist zwar in der Regel an sich nicht schädlich, wenn die gemessenen Durchflusswerte eines ersten Sensors mit den Durchflusswerten eines anderen ersten Sensors im Versorgungsnetz korrelieren, aber die maximale Wirksamkeit entfalten die Sensoren, wenn ihre Messwerte nicht miteinander korrelieren. Eine allgemeingültige Regel für die Vermeidung einer Korrelation zweier benachbarter Sensoren existiert nicht.

Vielmehr wählt der Fachmann vorteilhafterweise im konkreten Einzelfall die Platzierung der ersten Sensoren so aus, dass sie nicht miteinander korrelieren.

In einer Ausführungsform der Erfindung wird nicht nur ein einziger "zweiter Ort" im Versorgungsnetz bezüglich einer potenziellen Leckage untersucht, sondern das Verfahren wird für mehrere zweite Orte durchgeführt. Hierfür ist es wiederum wichtig, dass das selbstlernende Netz bereits in der Anlernphase für die mehreren zweiten Orte trainiert wird - nur dann kann das angelernte Netz im Betrieb die jeweiligen Durchflüsse an den mehreren zweiten Orten zuverlässig voraussagen.

In einer weiteren Ausführungsform weise das Versorgungsnetz *n* + *m* Sensoren auf, nämlich n erste Sensoren und *m* zweite Sensoren. In einem ersten Teil des Verfahrens wird das selbstlernende System mit den n ersten Sensoren so angelernt, dass es die Durchflüsse an den m zweiten Sensoren korrekt voraussagt. Anschließend wird in einem zweiten Teil des Verfahrens das selbstlernende System angelernt, basierend auf gemessenen Durchflüssen der m Sensoren, die nun als erste Sensoren fungieren, die Durchflüsse der an zweiten Orten fungierenden n zweiten Sensoren vorauszusagen. Damit ist die Anlernphase abgeschlossen und es folgt die Nutzungsphase. Hier wird das Versorgungsnetz zunächst auf Leckagen an den m Orten der m zweiten Sensoren untersucht. Anschließend werden die Rollen getauscht, d.h. die n vormals ersten Sensoren fungieren nun als zweite Sensoren und das Versorgungsnetz wird auf Leckagen an den n Orten der nun n zweiten Sensoren untersucht.

Ein Vorteil dieses Verfahrens ist, dass mehr Orte des Versorgungsnetzes auf Anomalien, das heißt Leckagen, untersucht werden können. Das Versorgungsnetz kann, abgesehen von den erwähnten *n* + *m* Sensoren, weitere Sensoren aufweisen, die in beiden Anlernphasen als erste Sensoren fungieren und das selbstlernende System dadurch robuster machen.

Die Erfindung betrifft nicht nur ein Verfahren zur Detektion einer Leckage von Fluid in einem Versorgungsnetz, sondern betrifft auch eine entsprechende Vorrichtung. Im Einzelnen betrifft die Erfindung eine Vorrichtung zur Detektion einer Leckage von Fluid in einem Versorgungsnetz mit Rohren, wobei die Rohre dazu geeignet sind, von einem Fluid durchströmt zu werden, ersten Sensoren zur Messung der Durchflüsse des Fluids an ersten Orten im Versorgungsnetz und mindestens einem zweiten Sensor zur Messung des Durchflusses des Fluids an einem zweiten Ort im Versorgungsnetz. Die Vorrichtung weist auf:
- ein selbstlernendes System, das dafür angelernt wurde, den Durchfluss an einem vorgegebenen Ort des Versorgungsnetzes vorherzusagen,
- eine erste Erfassungseinheit zur Erfassung der von den ersten Sensoren gemessenen Durchflüsse des Fluids an den ersten Orten im Versorgungsnetz,
- eine Vorhersageeinheit zur Vorhersage des Durchflusses an dem zweiten Ort mittels des angelernten Systems basierend auf den Werten der von der ersten Erfassungseinheit erfassten Durchflüsse an den ersten Orten,
- eine zweite Erfassungseinheit zur Erfassung des tatsächlichen Durchflusses des Fluids an dem zweiten Ort mittels des am zweiten Ort befindlichen zweiten Sensors,
- eine Bestimmungseinheit zur Bestimmung der Differenz zwischen dem tatsächlichen am zweiten Ort gemessenen Durchfluss und dem von dem angelernten System vorhergesagten Durchfluss am zweiten Ort, und
- eine Ausgabeeinheit zur Ausgabe einer Meldung einer vermuteten Leckage, wenn die bestimmte Differenz größer als ein vorgegebener Grenzwert ist.

Spezielle Ausbildungen und Variationen der Erfindung, die im Zusammenhang mit dem Verfahren zur Detektion einer Leckage beschrieben wurden, können entsprechend auf die genannte Vorrichtung übertragen werden.

Schließlich betrifft die Erfindung auch eine Anordnung, die die folgenden Komponenten aufweist:
- ein Versorgungsnetz mit Rohren, die dazu geeignet sind, von einem Fluid durchströmt zu werden, ersten Sensoren zur Messung der Durchflüsse des Fluids an ersten Orten im Versorgungsnetz und mindestens einem zweiten Sensor zur Messung des Durchflusses des Fluids an einem zweiten Ort im Versorgungsnetz, und
- eine Vorrichtung zur Detektion einer Leckage des Fluids wie oben genannt.

Nachfolgend wird die Erfindung anhand von Ausführungsbeispielen unter Bezugnahme auf die angehängten Zeichnungen beschrieben, in der
- Fig. 1: ein Versorgungsnetz, das mit mehreren unterschiedlichen Verbrauchern verbunden ist,
- Fig. 2: ein erstes Ausführungsbeispiel einer Vorrichtung zur Detektion einer Leckage von Fluid in einem Versorgungsnetz, und
- Fig. 3: ein zweites Ausführungsbeispiel einer Vorrichtung zur Detektion einer Leckage von Fluid in einem Versorgungsnetz
darstellt.

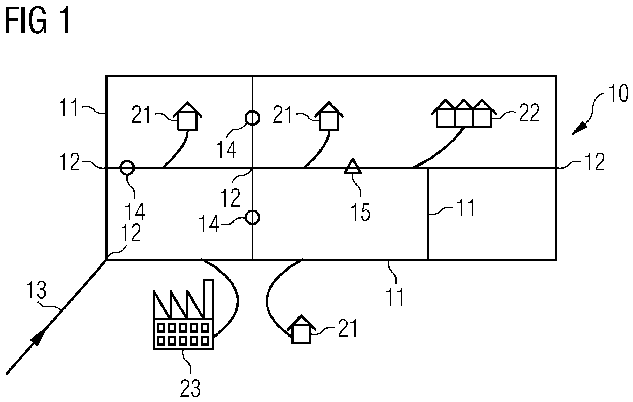

Die Fig. 1 illustriert beispielhaft und schematisch ein Versorgungsnetz 10 zur Versorgung einer Reihe von Verbrauchern mit Trinkwasser. Es handelt sich also um ein Trinkwasserversorgungsnetz. Selbstverständlich ist die Erfindung nicht auf Trinkwasserversorgungsnetze beschränkt, sondern ist auf andere Arten von Versorgungsnetzen ebenfalls anwendbar.

In der Fig. 1 ist ein Messbezirk, im Fachjargon zumeist "District Metering Area (DMA)" genannt, gezeigt, das Teil eines übergeordneten Trinkwasserversorgungsnetzes ist. Das in Fig. 1 gezeigte Versorgungsnetz 10 weist nur einen einzigen Zufluss 13 und keine Abflüsse auf. Das Versorgungsnetz 10 umfasst eine Anzahl von Rohren 11, wobei sich an mehreren Knoten 12 des Versorgungsnetzes 10 jeweils drei oder vier Rohre 11 treffen. Zur besseren Anschaulichkeit sind in Fig. 1 nicht alle vorhandenen Rohre 11 und Knoten 12 mit Bezugszeichen referenziert.

Fig. 1 zeigt exemplarisch auch einige Verbraucher, die an das Trinkwasserversorgungsnetz 10 angeschlossen sind. Die Verbraucher sind in verschiedene Kategorien eingeteilt; in Fig. 1 sind beispielhaft mehrere Einfamilienhäuser 21, ein Mehrfamilienhaus 22 und eine Fabrik 23 gezeigt. In der Realität sind gewöhnlicherweise mindestens mehrere Dutzende, oftmals mehrere Hunderte und manches Mal mehrere Tausende Verbraucher in einer DMA an ein Versorgungsnetz angeschlossen. Zur besseren Anschaulichkeit sind in Fig. 1 beispielhaft nur sehr wenige an das Versorgungsnetz 10 angeschlossene Verbraucher gezeigt.

Es ist in Fig. 1 also die Topologie des Versorgungsnetzes 10, insbesondere die Anzahl und Verzweigungen der Rohre 11, sowie die Anzahl und Art der an das Versorgungsnetz 10 angeschlossenen Verbraucher zur verbesserten Veranschaulichung der Erfindung stark vereinfacht dargestellt.

Das gezeigte Versorgungsnetz 10 weist keine (expliziten) Abflüsse auf. Dennoch findet mittels der Verbraucher ein Abfluss von Trinkwasser aus dem Versorgungsnetz 10 statt. Die exakten jeweiligen Verbräuche der Verbraucher sind jedoch aus praktischen und datenschutzrechtlichen Gründen nicht bekannt.

Das Versorgungsnetz 10 weist ferner drei erste Sensoren 14 auf. Diese ersten Sensoren 14 sind als Durchflussmesser ausgestaltet und können den Durchfluss des Trinkwassers durch die Rohre 11 an den jeweiligen Orten im Versorgungsnetz 10, an denen sich die ersten Sensoren 14 befinden, messen. Die Orte, an denen sich die ersten Sensoren 14 befinden und für die der jeweilige Durchfluss gemessen wird, werden als erste Orte bezeichnet.

Das Versorgungsnetz 10 weist des Weiteren einen weiteren Sensor auf, der als zweiter Sensor 15 bezeichnet wird. Der zweite Sensor 15 befindet sich an einem sogenannten zweiten Ort im Versorgungsnetz 10 und ist in der Lage, den Durchfluss an diesem zweiten Ort zu messen.

Die der Erfindung zugrunde liegende Aufgabe besteht nun darin, während des Betriebs des Versorgungsnetzes 10 eine etwaige Leckage im Versorgungsnetz 10 zu erkennen. Mit anderen Worten soll also ein etwaiges Leck im Versorgungsnetz 10 detektiert werden.

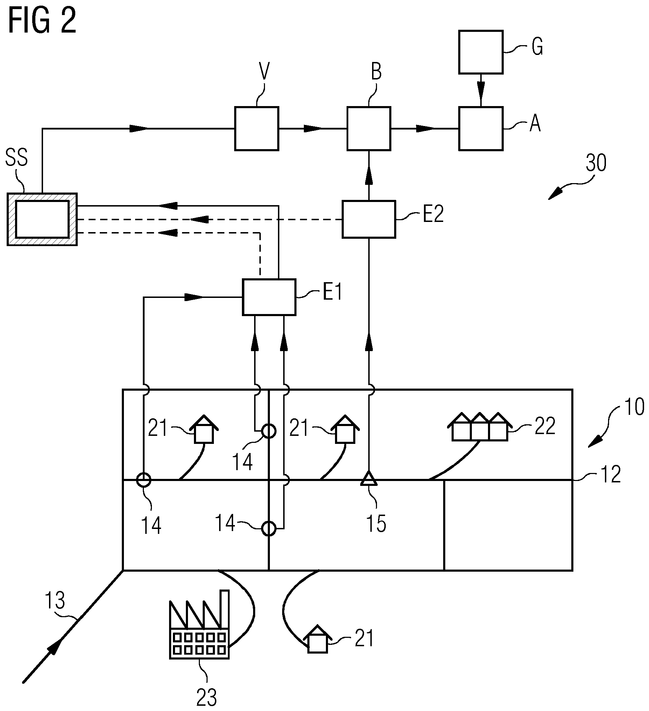

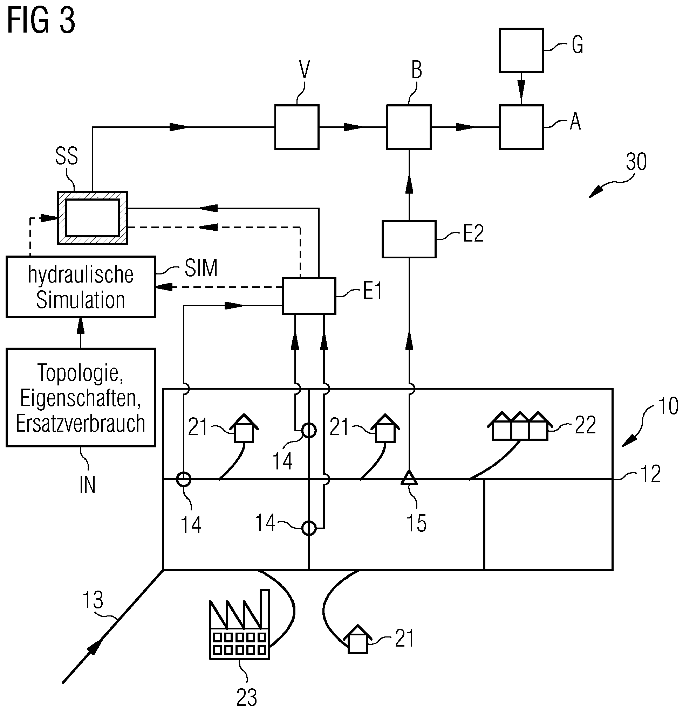

Hierfür bedient sich die Erfindung einer entsprechenden Vorrichtung 30. Ein erstes Ausführungsbeispiel einer solchen Vorrichtung 30 zur Detektion einer Leckage von Fluid in einem Versorgungsnetz 10 zeigt die Fig. 2. Demgegenüber zeigt die Fig. 3 ein leicht abgewandeltes Ausführungsbeispiel einer solchen Vorrichtung 30. Die beiden Ausführungsbeispiele unterscheiden sich im Wesentlichen in der Verwendung eines unterschiedlichen Zielwerts während des Anlernens des selbstlernenden Systems SS.

Zunächst zeigt die Fig. 2 dasselbe Versorgungsnetz 10 wie dasjenige in Fig. 1. Zur Vermeidung von Wiederholungen wird für die Beschreibung des Versorgungsnetzes 10 und der daran angeschlossenen Verbraucher auf die Fig. 1 verwiesen.

Die Fig. 2 zeigt außer dem Versorgungsnetz 10 und den daran angeschlossenen Verbrauchern auch eine Vorrichtung 30 zur Detektion einer Leckage von Fluid in dem Versorgungsnetz 10. Hierfür sind die drei ersten Sensoren 14 an eine erste Erfassungseinheit E1 angeschlossen. Die erste Erfassungseinheit E1 ist dazu ausgestaltet, die von den ersten Sensoren 14 gemessenen Durchflüsse zu erfassen und weiterzuleiten. Des Weiteren zeigt die Fig. 2 eine zweite Erfassungseinheit E2. Diese ist, analog zur ersten Erfassungseinheit E1, dazu ausgestaltet, den von dem zweiten Sensor 15 am zweiten Ort im Versorgungsnetz 10 gemessen Durchfluss zu erfassen und, sobald im Prozess erfordert, an eine entsprechende Stelle weiterzuleiten.

Während der Anlernphase ist das selbstlernende System SS im in der Fig. 2 gezeigten ersten Ausführungsbeispiel mit der ersten Erfassungseinheit E1 und der zweiten Erfassungseinheit E2 verbunden. Diese Verbindungen sind in Fig. 1 als gestrichelte Linien kenntlich gemacht. Die erste Erfassungseinheit E1 liefert die Eingangsdaten, nämlich die gemessenen Durchflüsse an den ersten Orten im Versorgungsnetz 10. Darauf basierend ist es die Aufgabe des selbstlernenden Systems SS, einen (erwarteten) Durchfluss an einem anderen Ort im Versorgungsnetz vorherzusagen bzw. zu bestimmen. Dieser andere Ort ist der bereits erwähnte zweite Ort, nämlich der Ort, an dem sich der zweite Sensor 15 befindet. Zu Beginn der Anlernphase wird der von dem selbstlernenden System SS bestimmte Durchfluss am zweiten Ort in der Regel noch nicht mit dem tatsächlichen Durchfluss an diesem Ort übereinstimmen. Um das selbstlernende System SS zu trainieren, also zu verbessern, wird das Konzept des überwachten Lernens *(englisch: supervised learning)* angewendet. Hierfür wird der von dem selbstlernenden System SS bestimmte Durchflusswert mit einem Zielwert verglichen. Dieser Zielwert ist im vorliegenden Ausführungsbeispiel der tatsächlich am zweiten Ort gemessene Durchfluss. Die Messung des Durchflusses an diesem Ort erfolgt vorteilhafterweise mit dem zweiten Sensor 15, der ohnehin für die Durchführung des Verfahrens während des Betriebs des Versorgungsnetzes 10 benötigt wird.

Der von dem zweiten Sensor 15 gemessene Durchfluss wird von der zweiten Erfassungseinheit E2 erfasst und an das selbstlernende System SS weitergeleitet. Anschließend wird in dem selbstlernenden System der von dem zweiten Sensor 15 gemessene Durchflusswert mit dem zuvor bestimmten/ vorhergesagten Wert verglichen. Ist die Übereinstimmung zu gering - was, wie oben angedeutet, insbesondere zu Beginn des Trainings die Regel sein dürfte - werden neue Durchflusswerte von den ersten Sensoren 14 gemessen. Für diese neuen Durchflusswerte versucht das selbstlernende System SS möglichst zutreffend den tatsächlichen Durchflusswert am zweiten Ort zu vorherzusagen.

Es ist vorteilhaft, wenn sich die von den ersten Sensoren 14 gemessenen Durchflüsse im zweiten Durchlauf von den gemessenen Durchflüssen im ersten Durchlauf unterscheiden. Sind die gemessenen Durchflüssen an den ersten Orten nämlich sehr ähnlich oder gar identisch, wird das selbstlernende System SS beim zweiten Durchlauf basierend auf dem Gelernten aus dem ersten Durchlauf den Durchfluss am zweiten Ort ohne große Probleme korrekt vorhersagen. Im Betrieb muss das selbstlernende System SS aber imstande sein, für unterschiedlichste Durchflüsse an den ersten Orten eine korrekte Vorhersage für den Durchfluss am zweiten Ort treffen zu können.

Die beschriebenen Schritte eines Durchlaufs (oder: Iteration) sind also: Messen der Durchflüsse an den ersten Orten; Vorhersagen bzw. Bestimmen des Durchflusses an dem zweiten Ort; und Vergleich des vorhergesagten Durchflusses mit dem tatsächlichen gemessenen Durchfluss.

Es werden so viele Durchläufe durchgeführt, bis das vorgegebene Abbruchkriterium erfüllt ist. Das Abbruchkriterium kann zum Beispiel darin bestehen, dass für zehn nacheinander erfolgte Durchläufe der Unterschied zwischen dem von dem selbstlernenden System SS bestimmten Durchfluss am zweiten Ort und dem tatsächlich vorliegenden Durchfluss (gemessen von dem am zweiten Ort befindlichen zweiten Sensor 15) jeweils kleiner als 5%, insbesondere kleiner als 2%, bevorzugt kleiner als 1%, sein muss.

Es ist vorteilhaft, dieses beispielhaft genannte Abbruchkriterium noch mit einer weiteren Bedingung zu verknüpfen, nämlich z.B. dass für die zehn nacheinander erfolgten Durchläufe die an den ersten Orten gemessenen Durchflüsse einen breiten Wertebereich abdecken. Dies bedeutet, dass z.B. zwischen dem kleinsten gemessenen Durchfluss jedes ersten Sensors 14 und dem größten gemessenen Durchfluss desselben ersten Sensors 14 ein Unterschied von mindestens 100% zu liegen hat. Es sind natürlich auch komplexere Vorgaben denkbar, um eine breite Abdeckung der ersten Durchflüsse in verschiedenen Durchläufen zu gewährleisten.

Nach der Anlernphase folgt der Betrieb, auch als Nutzphase bezeichnet, des Versorgungsnetzes 10. Hierbei werden wiederum die Durchflüsse an den ersten Orten im Versorgungsnetz gemessen. Dies geschieht mittels der ersten Sensoren 14. Die gemessenen Durchflusswerte werden von der ersten Erfassungseinheit E1 erfasst und an das selbstlernende System SS, das im Rahmen dieser Patentanmeldung nach Beendigung der Anlernphase auch als "angelerntes System" SS bezeichnet wird, weitergeleitet. Die Weiterleitung der von der ersten Erfassungseinheit E1 erfassten Durchflüsse an das angelernte System ist in Fig. 1 mit einer durchgezogenen Linie - zur Unterscheidung der gestrichelten Verbindung während der Anlernphase - kenntlich gemacht.

Das angelernte System SS trifft nun, basierend auf den gemessenen Durchflüssen an den ersten Orten, eine Vorhersage bezüglich des erwarteten Durchflusses am zweiten Ort im Versorgungsnetz 10. Diese Vorhersage wird von einer Vorhersageeinheit V getroffen. Der vorhergesagte Durchflusswert wird anschließend mit dem tatsächlich vorliegenden Durchflusswert am zweiten Ort verglichen - letzterer wurde gemessen mittels des zweiten Sensors 15 und erfasst von der zweiten Erfassungseinheit E2. Der Vergleich zwischen dem vorhergesagten Durchflusswert und dem tatsächlich vorliegenden Durchflusswert wird von der Bestimmungseinheit B durchgeführt. Es handelt sich dabei schlicht um eine Subtraktion der kleineren der beiden Werte von dem größeren der beiden Werte. Die so bestimmte Differenz wird anschließend an eine Ausgabeeinheit weitergegeben. Diese gibt eine Meldung aus, falls die Differenz größer als ein vorgegebener Grenzwert G ist.

Die Ausgabe einer entsprechenden Meldung ist ein Hinweis für den Betreiber des Versorgungsnetzes 10, dass eine Leckage im Versorgungsnetz 10, insbesondere im Bereich des zweiten Ortes, an dem der vorhergesagte Durchfluss von dem gemessenen Durchfluss abwich, vorliegt. Bedingungen für die Gültigkeit dieser Schlussfolgerung sind allerdings, dass sich die Topologie des Versorgungsnetzes sowie die Anzahl und Art der an sie angeschlossenen Verbraucher nach Beendigung der Anlernphase nicht verändert haben und dass das selbstlernende System SS zuverlässig und robust angelernt wurde.

Weist das Versorgungsnetz 10 mehrere zweite Ort mit zweiten Sensoren 15 auf und werden die vorhergesagten Durchflüsse mit den gemessenen Durchflüssen an mehreren zweiten Orten verglichen, kann aufgrund einer Abweichung von vorhergesagtem zu gemessenem Durchfluss an genau einem zweiten Sensor (oder zumindest einer Teilmenge von zweiten Sensoren) die potenzielle Leckage nicht nur erkannt, sondern auch - in gewissen Grenzen - lokalisiert werden. Eine detaillierte Lokalisierung mit anderen Verfahren ist in den meisten Fällen jedoch im Anschluss nötig.

Die Fig. 3 zeigt ein zweites Ausführungsbeispiel einer Vorrichtung 30 zum Erkennen einer Leckage von Fluid in einem Versorgungsnetz 10. Sie unterscheidet sich im Anlernen des selbstlernenden System SS von der Vorrichtung 30 des ersten Ausführungsbeispiels.

Konkret werden im zweiten Ausführungsbeispiel während der Anlernphase zunächst nur die gemessenen Durchflüsse an den ersten Orten von der ersten Erfassungseinheit E1 an das selbstlernende System SS weitergeleitet. Diese sagt wiederum bzw. bestimmt einen erwarteten Durchfluss an dem zweiten Ort im Versorgungsnetz 10. Dieser erwartete Durchfluss wird im Schritt iii) des Verfahrens allerdings nicht direkt mit dem am zweiten Ort gemessenen Durchfluss verglichen, sondern mit einem simulierten Durchfluss am zweiten Ort. Es ist von großer Bedeutung für ein erfolgreiches Anlernen des selbstlernenden Systems SS, dass der simulierte Durchfluss am zweiten Ort vertrauenswürdig, also korrekt, ist, da er den Zielwert darstellt, mit dem das selbstlernende System SS angelernt wird. Stimmt der Zielwert nicht mit der Realität überein, kann logischerweise auch das angelernte System SS die Realität nicht korrekt abbilden bzw. voraussagen.

Die Simulation SIM ist im vorliegenden Fall eines Trinkwasserversorgungsnetzes eine hydraulische Simulation. Hierfür werden auf Grundlage der Fluidmechanik die Durchflüsse und weitere Parameter (z.B. Drücke, Fließgeschwindigkeiten, ...) im Versorgungsnetz analytisch oder modellbasiert simuliert. Die Herausforderung einer hydraulischen Simulation SIM besteht in der Regel darin, dass sie bereits für topologisch relativ einfache Versorgungsnetze schnell recht komplex wird. Hinzu kommt, dass in der Regel eine Reihe von Eingabedaten IN für die hydraulische Simulation SIM benötigt werden. Diese umfassen unter anderem: Die Topologie, d.h. die Anordnung und der Verlauf der Rohre 11 und Knoten 12; der Durchfluss am Zufluss 13 in das Versorgungsnetz 10; die Anordnung und Art der Verbraucher; Ersatzverbrauchsprofile der einzelnen Verbrauchertypen, d.h. typische (oder: repräsentative) Verbrauchsprofile für die einzelnen Verbrauchertype; Eigenschaften der Rohre, wie z.B. Reibungskoeffizienten oder Innendurchmesser.

Basierend auf den gemessenen Durchflüssen an den ersten Orten und den zur Verfügung stehenden Eingangsdaten IN simuliert die hydraulische Simulation SIM den erwarteten Durchfluss an dem zweiten Ort und leitet diesen dem selbstlernenden System SS zu. Der simulierte Durchfluss am zweiten Ort fungiert als Zielwert für das selbstlernende System SS und als Maßstab, wie gut das selbstlernende System SS bereits trainiert ist.

Die Nutzungsphase, oder Betrieb des Versorgungsnetzes verläuft im zweiten Ausführungsbeispiel identisch zum ersten Ausführungsbeispiel, weswegen auf die Beschreibung derselben hierfür nach oben verwiesen wird.

Zusammenfassend ist festzustellen, dass die Erfindung ein Verfahren, eine Vorrichtung und eine Anordnung bereitstellt, womit auf einfache Art und Weise mithilfe eines selbstlernenden Systems eine Leckage von Fluid in einem Versorgungsnetz erkannt, und unter Umständen auch lokalisiert, werden kann.

## Patentansprüche

1. Verfahren zum Detektieren einer Leckage von Fluid in einem Versorgungsnetz (10), wobei das Versorgungsnetz (10) Rohre (11), durch die das Fluid strömt, erste Sensoren (14) zur Messung der Durchflüsse des Fluids an ersten Orten im Versorgungsnetz (10) und mindestens einen zweiten Sensor (15) zur Messung des Durchflusses des Fluids an einem zweiten Ort im Versorgungsnetz (10) aufweist, und wobei das Verfahren die folgenden Schritte umfasst:
a) Messen der Durchflüsse des Fluids an den ersten Orten mittels der ersten Sensoren (14),
b) Vorhersage des Durchflusses an dem zweiten Ort mittels eines selbstlernenden Systems (SS) basierend auf den Werten der in Schritt a) gemessenen Durchflüsse an den ersten Orten, wobei das selbstlernende System (SS) dafür angelernt wurde, den Durchfluss an einem vorgegebenen Ort im Versorgungsnetz (10) vorherzusagen,
c) Messen des tatsächlichen Durchflusses des Fluids an dem zweiten Ort mittels des am zweiten Ort befindlichen zweiten Sensors (15),
d) Ermitteln der Differenz zwischen dem tatsächlichen am zweiten Ort gemessenen Durchfluss und dem von dem angelernten System (SS) vorhergesagten Durchfluss am zweiten Ort, und
e) Ausgeben einer Meldung einer vermuteten Leckage, wenn die ermittelte Differenz größer als ein vorgegebener Grenzwert (G) ist.

2. Verfahren nach Anspruch 1,
wobei das selbstlernende System (SS) mittels der folgenden Schritte angelernt wurde:
i) Messen der Durchflüsse des Fluids an den ersten Orten im Versorgungsnetz (10) mittels der ersten Sensoren (14),
ii) Bestimmen des Durchflusses an dem zweiten Ort mittels des selbstlernenden Systems (SS) basierend auf den Werten der in Schritt i) gemessenen Durchflüsse an den ersten Orten,
iii) Ermitteln der Differenz zwischen dem in Schritt ii) bestimmten Durchfluss und einem Zielwert,
iv) Anpassen des selbstlernenden Systems (SS) unter Berücksichtigung der in Schritt iii) ermittelten Differenz, und
v) Wiederholen der Schritte i) bis iv) bis zu einem vorgegebenen Abbruchkriterium.

3. Verfahren nach Anspruch 2,
wobei das Anlernen des selbstlernenden Systems (SS) gemäß der Schritte i) bis v) sowie die Detektion der Leckage gemäß der Schritte a) bis e) für mehrere unterschiedliche zweite Orte durchgeführt werden.

4. Verfahren nach Anspruch 3,
wobei
- die Schritte i) bis v) wiederholt werden unter der Maßgabe, dass anstatt der ersten Sensoren (14) an den ersten Orten die zweiten Sensoren (15) an den zweiten Orten und umgekehrt verwendet werden, und
- die Schritte a) bis e) wiederholt werden unter der Maßgabe, dass anstatt der ersten Sensoren (14) an den ersten Orten die zweiten Sensoren (15) an den zweiten Orten und umgekehrt verwendet werden.

5. Verfahren nach einem der Ansprüche 2 bis 4,
wobei das Abbruchkriterium darin besteht, dass eine durchschnittliche Differenz zwischen dem in Schritt ii) bestimmten Durchfluss an dem zweiten Ort und dem Zielwert einen vorgegebenen Schwellenwert unterschreitet.

6. Verfahren nach einem der vorhergehenden Ansprüche,
wobei der Zielwert der von dem zweiten Sensor (15) tatsächlich gemessene Durchfluss des Fluids durch das Rohr (11) am zweiten Ort ist.

7. Verfahren nach einem der Ansprüche 1 bis 5,
wobei der Zielwert mittels einer Simulation (SIM) bestimmt wurde.

8. Verfahren nach Anspruch 7,
wobei die Simulation als Eingangsdaten (IN) die Topologie des Versorgungsnetzes (10), die Orte und Art der Verbraucher sowie für jeden Verbraucher ein Ersatzverbrauchsprofil verwendet.

9. Verfahren nach Anspruch 8,
wobei die Eingangsdaten (IN) vor der Bestimmung des Zielwerts mittels einer Reihenentwicklung, insbesondere einer Hauptkomponentenanalyse, reduziert werden.

10. Verfahren nach einem der vorhergehenden Ansprüche,
wobei das Verfahren auch die Platzierung der ersten Sensoren (14) an den ersten Orten im Versorgungsnetz (10) umfasst, wobei insbesondere die ersten Sensoren (14) so platziert werden, dass ihre Messwerte nicht miteinander korrelieren.

11. Verfahren nach einem der vorhergehenden Ansprüche,
wobei das Fluid Wasser ist und es sich bei dem Versorgungsnetz (10) um ein Trinkwasserversorgungs- oder Abwassernetz handelt.

12. Verfahren nach einem der Ansprüche 1 bis 10,
wobei das Fluid ein Gas ist und es sich bei dem Versorgungsnetz (10) um ein Gas- oder Fernwärmeversorgungsnetz handelt.

13. Vorrichtung (30) zur Detektion einer Leckage von Fluid in einem Versorgungsnetz (10) mit Rohren (11), die dazu geeignet sind, von einem Fluid durchströmt zu werden, ersten Sensoren (14) zur Messung der Durchflüsse des Fluids an ersten Orten im Versorgungsnetz (10) und mindestens einem zweiten Sensor (15) zur Messung des Durchflusses des Fluids an einem zweiten Ort im Versorgungsnetz (10), wobei die Vorrichtung (30) aufweist:
- ein selbstlernendes System (SS), das dafür angelernt wurde, den Durchfluss an einem vorgegebenen Ort im Versorgungsnetz (10) vorherzusagen,
- eine erste Erfassungseinheit (E1) zur Erfassung der von den ersten Sensoren (14) gemessenen Durchflüsse des Fluids an den ersten Orten im Versorgungsnetz (10),
- eine Vorhersageeinheit (V) zur Vorhersage des Durchflusses an dem zweiten Ort mittels des angelernten Systems (SS) basierend auf den Werten der von der ersten Erfassungseinheit (E1)erfassten Durchflüsse an den ersten Orten,
- eine zweite Erfassungseinheit (E2) zur Erfassung des tatsächlichen Durchflusses des Fluids an dem zweiten Ort mittels des am zweiten Ort befindlichen zweiten Sensors (15),
- eine Bestimmungseinheit (B) zur Bestimmung der Differenz zwischen dem tatsächlichen am zweiten Ort gemessenen Durchfluss und dem von dem angelernten System (SS) vorhergesagten Durchfluss am zweiten Ort, und
- eine Ausgabeeinheit (A) zur Ausgabe einer Meldung einer vermuteten Leckage, wenn die bestimmte Differenz größer als ein vorgegebener Grenzwert (G) ist.

14. Anordnung umfassend
- ein Versorgungsnetz (10) mit Rohren (11), die dazu geeignet sind, von einem Fluid durchströmt zu werden, ersten Sensoren (14) zur Messung der Durchflüsse des Fluids an ersten Orten im Versorgungsnetz (10) und mindestens einem zweiten Sensor (15) zur Messung des Durchflusses des Fluids an einem zweiten Ort im Versorgungsnetz (10), und
- eine Vorrichtung (30) zur Detektion einer Leckage des Fluids gemäß Anspruch 13.
